# FASCICULE DE BREVET EUROPEEN

(11) **EP 1 865 185 B1**
(45) Date de publication et mention de la délivrance du brevet: **11.08.2010**
(21) Numéro de dépôt: 07107837.2
(22) Date de dépôt: 09.05.2007
(51) Int. Cl.: F02M 35/10

(54) **Dispositif d'acheminement d'air de combustion vers un moteur à combustion interne, et véhicule ainsi équipé.**
Vorrichtung zur Leitung von Verbrennungsluft zu einer Brennkraftmaschine und ein damit ausgestattetes Fahrzeug
Device for guiding combustion air towards an internal combustion engine and vehicle equipped with same.

(30) Priorité: 08.06.2006 FR 0652062
(43) Date de publication de la demande: 12.12.2007
(73) Titulaire: PEUGEOT CITROËN AUTOMOBILES S.A., 78140 Vélizy Villacoublay (FR)
(72) Inventeur: PICHON, Jean-Charles, 92130 Issy Les Moulineaux (FR)
(74) Mandataire: Allain, Laurent

(56) Documents cités:
- WO-A-99/02828
- JP-A- 10 047 178
- US-A- 5 927 254

## Description

L'invention concerne le domaine de l'industrie automobile, et en particulier l'alimentation en air des moteurs à combustion interne.

La puissance délivrée par un moteur à combustion interne est proportionnelle à la quantité de carburant qui est brûlée dans les chambres de combustion, et ce quel que soit le type précis de moteur utilisé : essence ou diesel, atmosphérique ou suralimenté. Le rapport entre la masse d'air de combustion et la masse de carburant consommé doit être en permanence à sa valeur optimale pour obtenir une combustion complète tout en minimisant les rejets polluants.

Pour augmenter la puissance délivrée par un moteur de cylindrée donnée, et pour une vitesse de rotation donnée, il faut augmenter la quantité de carburant à brûler. Il faut aussi augmenter dans la même proportion la quantité d'air de combustion. L'optimisation du remplissage des chambres de combustion est réalisée en aspirant de l'air le plus dense possible.

A cet effet, on peut par exemple compresser l'air avec un turbocompresseur, puis le refroidir dans un échangeur avant d'alimenter les chambres de combustion. C'est généralement la méthode choisie sur les moteurs diesel modernes. Dans ce cas, l'air subit différentes variations de pression et de température. Afin que la densité finale de l'air soit satisfaisante, l'air entrant dans le compresseur doit être le plus froid possible. En effet, toute élévation de sa température à l'entrée du turbocompresseur se traduit par une élévation de sa température en sortie du turbocompresseur, dans la proportion du facteur de suralimentation. Il en est de même entre l'entrée et la sortie du refroidisseur.

Le problème se pose de manière similaire pour des moteurs « atmosphériques » (dépourvus de turbocompresseur). Là aussi, l'air d'admission doit être le plus froid possible afin d'obtenir une densité à l'admission la plus élevée possible, en vue d'extraire du moteur la puissance la plus élevée possible.

Cette obtention permanente d'une densité élevée est, cependant, rendue difficile par les apports de chaleur que l'air de combustion subit lors de son cheminement dans la ligne d'admission d'air, de la part de l'environnement de cette ligne d'admission. Le réchauffement qu'ils provoquent diminue la densité de l'air d'admission, d'une façon souvent irrégulière.

Le but de l'invention est de proposer une configuration de la ligne d'admission d'air qui vise à diminuer ces apports de chaleur à l'air de combustion préalablement à son entrée dans les chambres de combustion. On vise ainsi à fiabiliser l'obtention permanente d'une densité élevée de cet air de combustion, pour optimiser la puissance délivrée par le moteur.

A cet effet, l'invention a pour objet un dispositif d'acheminement d'air de combustion vers un moteur à combustion interne de véhicule automobile, du type comprenant un premier conduit amont d'acheminement d'air vers un filtre à air et un deuxième conduit aval d'acheminement d'air hors du filtre à air et vers le moteur, caractérisé en ce que les conduits sont au contact l'un de l'autre suivant au moins une portion de leur longueur supérieure ou égale à 10 centimètres et en ce que les conduits sont formés, sur ladite ou sur chaque portion, par un tube unique comportant une paroi interne formant une cloison de séparation définissant lesdits conduits.

A noter qu'il est connu du document JP10047178 A, un moteur de moto, avec un circuit d'amenée d'air « sale» au filtre à air croisant le circuit retour, d'amenée de l'air « propre » filtré vers le carburateur. Le circuit d'amenée d'air sale est formé d'un conduit essentiellement parallélépipédique, traversé à 90° par des conduits d'air propre, la disposition étant normalement conçue pour éviter trop de propagation de la chaleur du moteur vers le filtre, le carburateur et le réservoir de carburant.

Selon une variante de l'invention, les conduits sont au contact l'un de l'autre, sur ladite ou sur chaque portion, suivant de préférence entre 10% et 50% du périmètre d'une section transversale de chacun des conduits.

Les conduits peuvent être, sur ladite ou sur chaque portion, venus de matière.

Le dispositif peut comporter un turbocompresseur dans lequel débouche ledit conduit aval.

Les conduits amont et aval peuvent avoir un diamètre hydraulique équivalent sensiblement constant sur l'ensemble de leur longueur.

Les conduits peuvent être en matériau plastique de type polypropylène.

L'invention a également pour objet un véhicule automobile caractérisé en ce qu'il comprend un dispositif d'acheminement d'air du type précédent.

Comme on l'aura compris, l'invention consiste à accoler sur une partie de leurs périmètres les conduites d'air entrant et d'air sortant du filtre à air. De cette façon, on réduit les influences exercées par l'environnement de ces conduites sur l'état thermique de l'air qui les traverse, et on limite donc son réchauffement.

Les transferts de chaleur subis par l'air traversant les conduits amont et aval connectés au filtre à air s'effectuent selon les trois modes habituels :
- le rayonnement issu des pièces chaudes situées à proximité, dans le compartiment moteur du véhicule : bloc moteur, culasse, collecteur d'échappement, circuit d'eau, turbocompresseur... ;
- la convection par le flux d'air chaud, pulsé par le groupe motoventilateur, sortant des échangeurs situés en façade du compartiment moteur, et par l'air circulant sous le capot, qui est réchauffé au contact des pièces chaudes ;
- la conduction par le contact direct des conduites avec des éléments chauds au niveau de leurs points de fixation.

En réduisant la surface extérieure des conduits par rapport au cas habituel où ils sont totalement séparés l'un de l'autre, l'invention permet de réduire les transferts de chaleur par rayonnement et par convection. De plus, la plus grande compacité de la ligne offre plus de liberté aux concepteurs du véhicule pour écarter les conduits des sources de chaleur, donc notamment pour diminuer le rayonnement. Egalement, cette configuration monobloc rigidifie les conduits, et permet ainsi de diminuer le nombre de points de fixation, donc le nombre de points de conduction.

L'invention sera mieux comprise à la lecture de la description qui suit, donnée en référence aux figures annexées suivantes :
- la figure 1 qui représente schématiquement un exemple de compartiment moteur d'un véhicule équipé d'un dispositif d'acheminement d'air de combustion selon l'invention;
- la figure 2 qui représente schématiquement le filtre à air de ce véhicule ;
- la figure 3 qui représente un exemple de section d'un conduit d'acheminement de l'air d'admission selon l'invention.

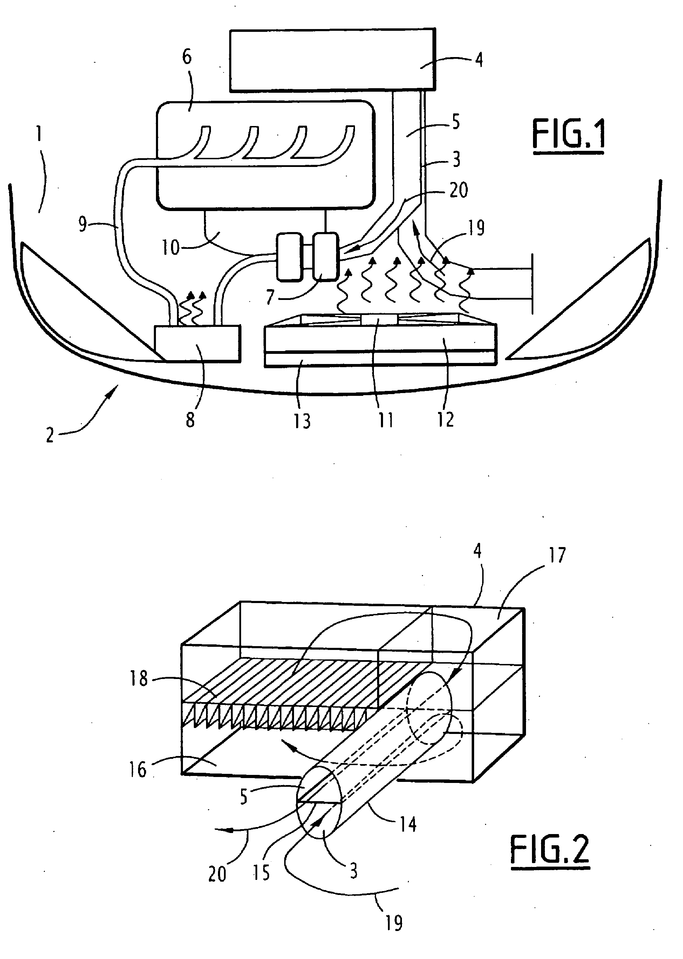

Le compartiment moteur 1 du véhicule 2 représenté sur la figure 1 comporte classiquement les éléments suivants :
- un conduit amont 3 d'acheminement d'air d'admission vers un filtre à air 4, et un conduit aval 5 d'acheminement d'air hors du filtre à air 4 en direction du moteur 6 ;
- un turbocompresseur 7 qui traite l'air d'admission que lui apporte le conduit aval 5 ;
- un refroidisseur d'air suralimenté 8 qui traite l'air d'amission sortant du turbocompresseur 7 ;
- un conduit d'amission d'air 9 qui amène l'air suralimenté refroidi dans le bloc moteur 6 ;
- un collecteur d'échappement 10 qui recueille les gaz d'échappement en sortie du bloc moteur 6 ;
- un groupe motoventilateur 11 situé en face arrière d'un bloc comportant le radiateur 12 du circuit de refroidissement du moteur 6 et le condenseur 13 du système de climatisation du véhicule 2.

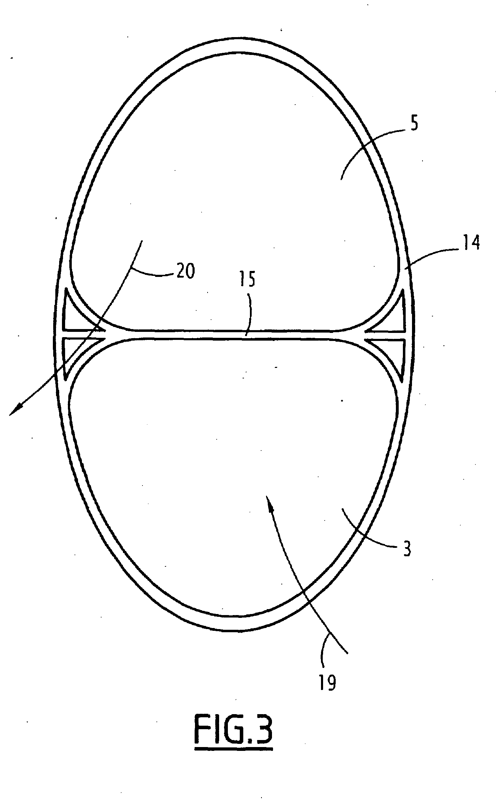

Selon l'invention, comme cela est mieux visible sur les figures 2 et 3, les conduits amont 3 et aval 5 d'acheminement de l'air de combustion en direction et hors du filtre à air 4 sont accolés sur une fraction de leur longueur, de préférence au moins sur 10 cm (par exemple entre 20 et 50 cm pour les véhicules de tourisme), et de préférence sur une fraction de 10 à 50% du périmètre d'une section transversale de chaque conduit 3, 5. Dans l'exemple représenté, cela est obtenu en réalisant sur la fraction concernée le conduit d'acheminement d'air de combustion sous forme d'un tube 14 unique de section ovale et comportant une cloison interne 15 définissant les conduits amont 3 et aval 5. De préférence, la cloison 15 est venue de matière avec le restant du tube 14.

Comme on le voit sur la figure 2, le conduit amont 3 débouche dans un compartiment inférieur 16 du filtre à air 4, et le conduit 5 est branché sur un compartiment supérieur 17 de ce même filtre à air 4, les deux compartiments étant séparés l'un de l'autre par un élément filtrant 18 que traverse l'air de combustion selon le cheminement marqué par les flèches 19 (air entrant) et 20 (air sortant).

Comme on le voit sur la figure 1, les conduits amont 3 et aval 5 connectés au filtre à air 4 sont soumis aux multiples influences thermiques des divers éléments du compartiment moteur 1, alors qu'un changement de température ou de pression de l'air dans les conduits 3, 5 entre l'amont et l'aval du filtre à air 4 n'est pas souhaité (contrairement au cas de l'entrée et de la sortie du turbocompresseur 7 ou du refroidisseur 8).

L'invention, en accolant les deux conduits amont 3 et aval 5 sur au moins une portion de leurs longueurs, permet comme on l'a dit de diminuer les influences extérieures sur la température de l'air d'admission pénétrant dans le turbocompresseur 8, ou alimentant directement le bloc moteur 6 dans le cas d'un véhicule équipé d'un moteur atmosphérique, donc dépourvu de turbocompresseur.

L'invention ne vise pas à créer des échanges thermiques entre les conduits amont 3 et aval 5. Dans les faits, l'air circulant dans le conduit amont 3 peut être un peu plus froid que l'air circulant dans le conduit aval 5. Si la conduction de la chaleur à travers la cloison 15 est significative, il y a une possibilité que l'air circulant dans le conduit aval 5 soit légèrement refroidi par rapport au cas où les conduits 3, 5 seraient disjoints, avant son entrée dans le turbocompresseur 7 ou le moteur 6. Cela peut donc jouer favorablement sur la densité de l'air d'admission, donc sur la puissance délivrée par le moteur 6.

L'étanchéité entre les deux conduits 3, 5 doit être assurée, car l'un transporte de l'air « sale » et l'autre de l'air filtré.

Les conduits 3, 5 (ou le tube 14 qui les définit) sont classiquement réalisés généralement en une matière plastique thermoplastique (polypropylène, polyamide), mais peuvent être réalisés en tout autre matériau convenable.

Leur section peut être variée : circulaire, ovale, rectangulaire. Leur diamètre est généralement compris entre 40 et 80mm. Dans le cas où on souhaite modifier un dispositif d'acheminement d'air existant, on pourra conserver à chaque conduit 3, 5 son diamètre hydraulique équivalent D_{H} = 4 S/P, avec S : section du conduit 3,5 et P = périmètre du conduit 3,5.

Bien entendu, l'accolement des conduits amont 3 et aval 5 peut être réalisé sur une pluralité de portions de leurs longueurs.

De préférence, les deux conduits 3, 5 conservent un diamètre hydraulique équivalent DH sensiblement constant sur l'ensemble de leurs longueurs.

L'invention s'avère particulièrement efficace lorsque le véhicule roule à une basse vitesse et que le compartiment moteur est donc peu ventilé et coiffé par un capot chaud, et lorsque le moteur du véhicule est fortement sollicité pour délivrer une puissance élevée. Ces circonstances provoquent un échauffement important du moteur et des organes annexes, et l'invention permet d'atténuer les effets négatifs de cet échauffement sur la densité de l'air d'admission.

## Revendications

1. Dispositif d'acheminement d'air de combustion vers un moteur à combustion interne (6) de véhicule automobile (2), du type comprenant un premier conduit amont (3) d'acheminement d'air vers un filtre à air (4) et un deuxième conduit aval (5) d'acheminement d'air hors du filtre à air (4) et vers le moteur (6), **caractérisé en ce que** les conduits (3, 5) ont leur paroi externe au contact l'une de l'autre suivant au moins une portion de leur longueur supérieure ou égale à 10 centimètres et **en ce que** les conduits (3, 5) sont formés, sur ladite ou sur chaque portion, par un tube unique (14) comportant une paroi interne (15) formant une cloison de séparation définissant lesdits conduits (3, 5).

2. Dispositif d'acheminement d'air selon la revendication 1, **caractérisé en ce que** les conduits (3, 5) ont au contact l'un de l'autre, sur ladite ou sur chaque portion, suivant entre 10% et 50% du périmètre d'une section transversale de chacun des conduits (3, 5).

3. Dispositif d'acheminement d'air selon la revendication 1, **caractérisé en ce que** les conduits (3, 5) sont, sur ladite ou sur chaque portion, venus de matière.

4. Dispositif d'acheminement d'air selon l'une quelconque des revendications 1 à 3, **caractérisé en ce qu'**il comporte un turbocompresseur (8) dans lequel débouche ledit conduit aval (5).

5. Dispositif d'acheminement d'air selon l'une quelconque des revendications 1 à 4, **caractérisé en ce que** les conduits amont (3) et aval (5) ont un diamètre hydraulique équivalent D_{H} sensiblement constant sur l'ensemble de leur longueur.

6. Dispositif d'acheminement d'air selon l'une quelconque des revendications 1 à 5, **caractérisé en ce que** les conduits (3, 5) sont en matériau plastique par exemple de type polypropylène.

7. Véhicule automobile (2) **caractérisé en ce qu'**il comprend un dispositif d'acheminement d'air selon l'une quelconque des revendications 1 à 6.

## Claims

1. Device for guiding combustion air towards an internal combustion engine (6) of an automobile vehicle (2), of the type comprising a first upstream duct (3) for guiding air towards an air filter (4) and a second downstream duct (5) for guiding air out of the air filter (4) and towards the engine (6), **characterized in that** the ducts (3, 5) have their external wall in contact with each other following at least a portion of their length, greater than or equal to 10 centimetres, and **in that** the ducts (3, 5) are formed, on the said or on each portion, by a single tube (14) comprising an internal wall (15) forming a separation partition defining the said ducts (3, 5).

2. Device for guiding air according to Claim 1, **characterized in that** the ducts (3, 5) are in contact with each other, on the said or on each portion, following between 10% and 50% of the perimeter of a transverse section of each of the ducts (3, 5).

3. Device for guiding air according to Claim 1, **characterized in that** the ducts (3, 5) are made of the same material on the said or on each portion.

4. Device for guiding air according to any one of Claims 1 to 3, **characterized in that** it comprises a turbocompressor (8) into which the said downstream duct (5) opens.

5. Device for guiding air according to any one of Claims 1 to 4, **characterized in that** the upstream (3) and downstream (5) ducts have an equivalent hydraulic diameter D_{H} which is substantially constant over the whole of their length.

6. Device for guiding air according to any one of Claims 1 to 5, **characterized in that** the ducts (3, 5) are made of plastic material, for example of the polypropylene type.

7. Automobile vehicle (2), **characterized in that** it comprises a device for guiding air according to any one of Claims 1 to 6.

## Patentansprüche

1. Vorrichtung zum Befördern von Verbrennungsluft zu einem Verbrennungsmotor (6) eines Kraftfahrzeugs (2) des Typs, die eine erste stromaufwärtige Leitung (3) zum Befördern von Luft zu einem Luftfilter (4) und eine zweite stromabwärtige Leitung (5) Befördern von Luft aus dem Luftfilter (4) und zu dem Motor (6) aufweist, **dadurch gekennzeichnet, dass** die Leitungen (3, 5) ihre Außenwand in Berührung miteinander entlang mindestens eines Abschnitts ihrer Länge größer oder gleich 10 Zentimeter haben und dass die Leitungen (3, 5) auf dem oder jedem Abschnitt aus einem einzigen Rohr (14) ausgebildet sind, das eine Innenwand (15) aufweist, die eine Trennwand bildet, die die Leitungen (3, 5) definiert.

2. Luftbeförderungsvorrichtung nach Anspruch 1, **dadurch gekennzeichnet, dass** die Leitungen (3, 5) bei dem Kontakt miteinander auf dem oder jedem Abschnitt zwischen 10 % und 50 % des Umfangs eines Querschnitts jeder der Leitungen (3, 5) haben.

3. Luftbeförderungsvorrichtung nach Anspruch 1, **dadurch gekennzeichnet, dass** die Leitungen (3, 5) auf dem oder auf jedem Abschnitt aus einem Stück geformt sind.

4. Luftbeförderungsvorrichtung nach einem der Ansprüche 1 bis 3, **dadurch gekennzeichnet, dass** sie einen Turboverdichter (8) aufweist, in den die stromabwärtige Leitung (5) mündet.

5. Luftbeförderungsvorrichtung nach einem der Ansprüche 1 bis 4, **dadurch gekennzeichnet, dass** die stromaufwärtige Leitung (3) und die stromabwärtige Leitung (5) einen äquivalenten hydraulischen Durchmesser D_{H} haben, der auf ihrer Länge im Wesentlichen konstant ist.

6. Luftbeförderungsvorrichtung nach einem der Ansprüche 1 bis 5, **dadurch gekennzeichnet, dass** die Leitungen (3, 5) aus einem Kunststoffwerkstoff bestehen, zum Beispiel des Typs Polypropylen.

7. Kraftfahrzeug (2), **dadurch gekennzeichnet, dass** es eine Luftbeförderungsvorrichtung nach einem der Ansprüche 1 bis 6 aufweist.
